# FASCICULE DE BREVET EUROPEEN

(11) **EP 0 786 221 B1**
(45) Date de publication et mention de la délivrance du brevet: **02.01.2002**
(21) Numéro de dépôt: 97400124.0
(22) Date de dépôt: 21.01.1997
(51) Int. Cl.: A47J 27/21

(54) **Bouilloire électrique à fond chauffant**
Elektrischer Wasserkocher mit heizendem Boden
Electric kettle with heating bottom

(30) Priorité: 25.01.1996 FR 9600866
(43) Date de publication de la demande: 30.07.1997
(73) Titulaire: SEB S.A., 69130 Ecully (FR)
(72) Inventeur: Lacombe, Jaques, 70100 Gray (FR)
(74) Mandataire: Keib, Gérard

(56) Documents cités:
- EP-A- 0 595 085
- FR-A- 2 446 576
- FR-A- 2 708 407

## Description

La présente invention concerne une bouilloire électrique à fond chauffant et un boîtier de connexion pour de telles bouilloires.

On connaît des bouilloires électriques à fond chauffant, telles que décrites dans le document FR-A-2 708 407, qui comprennent un réservoir pour le liquide à chauffer, généralement de l'eau, et des moyens de chauffage électrique disposés sous le fond du réservoir pour chauffer ce dernier et porter le liquide à ébullition.

Ces bouilloires comportent en outre une commande manuelle, du type Marche / Arrêt, pour commander le fonctionnement des moyens de chauffage et des moyens de régulation susceptibles de modifier, et notamment de couper, le fonctionnement des moyens de chauffage électrique en fonction par exemple de la température du fond du réservoir ou de la vapeur d'eau. Des organes de connexion sont reliés à une source de courant électrique, soit au moyen d'un cordon électrique qui vient en prise, généralement de manière amovible, avec les organes de connexion, soit par l'intermédiaire d'un socle d'alimentation électrique sur lequel la bouilloire est posée lors du chauffage du liquide, les organes de connexion débouchant sous la base de la bouilloire pour venir en contact avec des éléments de connexion à l'intérieur du socle d'alimentation.

Les nombreux éléments séparés de régulation et de connexion sont, dans les bouilloires classiques, connectés électriquement au moyen de plusieurs fils de liaison électrique qui s'étendent sous le fond chauffant du réservoir et dans la poignée de la bouilloire.

Le montage de ces bouilloires est alors long et délicat car il met en oeuvre de nombreux éléments intermédiaires de raccordement.

Le passage des fils de liaison électrique entre les différentes parties de la bouilloire nécessite de prévoir des moyens supplémentaires pour garantir l'étanchéité et l'isolation électrique des différentes parties de la bouilloire.

Le but de la présente invention est de simplifier la connexion des éléments de régulation et de connexion nécessaires au fonctionnement d'une bouilloire à fond chauffant et d'obtenir ainsi une construction à moindre coût de bouilloires à socle d'alimentation ou de bouilloires à cordon d'alimentation amovible.

La bouilloire électrique visée par l'invention est caractérisée en ce qu'elle comprend un boîtier de connexion en matière électriquement isolante, les moyens de régulation et les organes de connexion comportant des parties formant broches débouchant dans le boîtier de connexion, et en ce que les fils de liaison électrique reliant les parties formant broches des moyens de régulation et des organes de connexion sont logés dans le boîtier de connexion.

Grâce au boîtier de connexion, les liaisons électriques entre les moyens de régulation et les organes de connexion sont réalisées à l'intérieur de ce boîtier, dans une zone étanche et isolée électriquement.

Les moyens de régulation et de connexion étant directement embrochés dans le boîtier de connexion, le montage de la bouilloire électrique est simplifié et on obtient de ce fait une construction très économique.

Selon une version préférée de l'invention, la bouilloire comprend un détecteur de vapeur et un orifice de passage de la vapeur disposé à proximité du bord supérieur du réservoir et débouchant dans une poignée de la bouilloire, le détecteur de la bouilloire étant disposé sous la poignée et étant fixé par une partie formant broche sur le boîtier de connexion.

Cette disposition du détecteur de vapeur, directement embroché sur le boîtier de connexion, permet de supprimer tous les fils de liaison électrique existant dans les bouilloires classiques et logés à l'intérieur de la poignée.

De préférence, un conduit de vapeur s'étend sensiblement parallèlement à une paroi latérale du réservoir entre l'orifice de passage de la vapeur et le détecteur de vapeur.

Cette cheminée de vapeur assez courte, d'une longueur égale sensiblement à la hauteur du réservoir, permet d'obtenir un temps de réaction rapide du détecteur de vapeur.

Selon une version avantageuse de l'invention, les moyens de régulation comprennent un limiteur thermique disposé sous le fond du réservoir et monté aux moyens de chauffage, le boîtier de connexion comprenant une partie de prolongement s'étendant sous le fond du réservoir et le limiteur thermique étant fixé par une partie formant broche sur la partie de prolongement du boîtier.

Ce dernier permet également de supprimer tous fils de liaisons électriques apparents dans la zone de chauffe de la bouilloire, améliorant ainsi le niveau de sécurité électrique.

Le montage électrique du limiteur thermique est également réalisé très simplement, par introduction d'une broche de contact électrique dans le boîtier de connexion.

Selon un autre aspect de l'invention, un boîtier de connexion pour bouilloire comprend des orifices adaptés au passage de parties formant broches des moyens de régulation et des organes de connexion de la bouilloire, des fils de liaisons électriques s'étendant à l'intérieur du boîtier entre les orifices.

Le boîtier de connexion forme ainsi une pièce monobloc sur laquelle les différents moyens de connexion et de régulation sont directement embrochés.

Le montage des fils électriques dans le boîtier peut donc être réalisé indépendamment du montage de la bouilloire.

D'autres particularités et avantages de l'invention apparaîtront encore dans la description ci-dessous.

Aux dessins annexés, donnés à titre d'exemples non limitatifs :
- la figure 1 est une vue en coupe d'une bouilloire conforme à un premier mode de réalisation de l'invention ;
- la figure 2 est une vue en coupe d'une bouilloire conforme à un second mode de réalisation de l'invention ; et
- la figure 3 est une vue en perspective d'un boîtier de connexion conforme à l'invention.

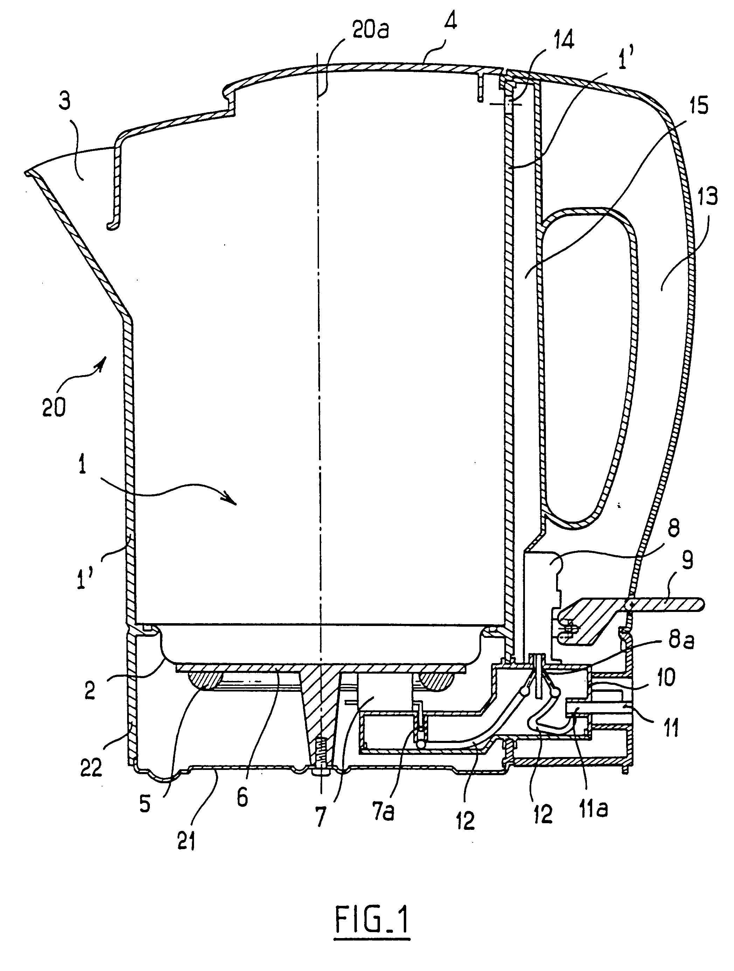

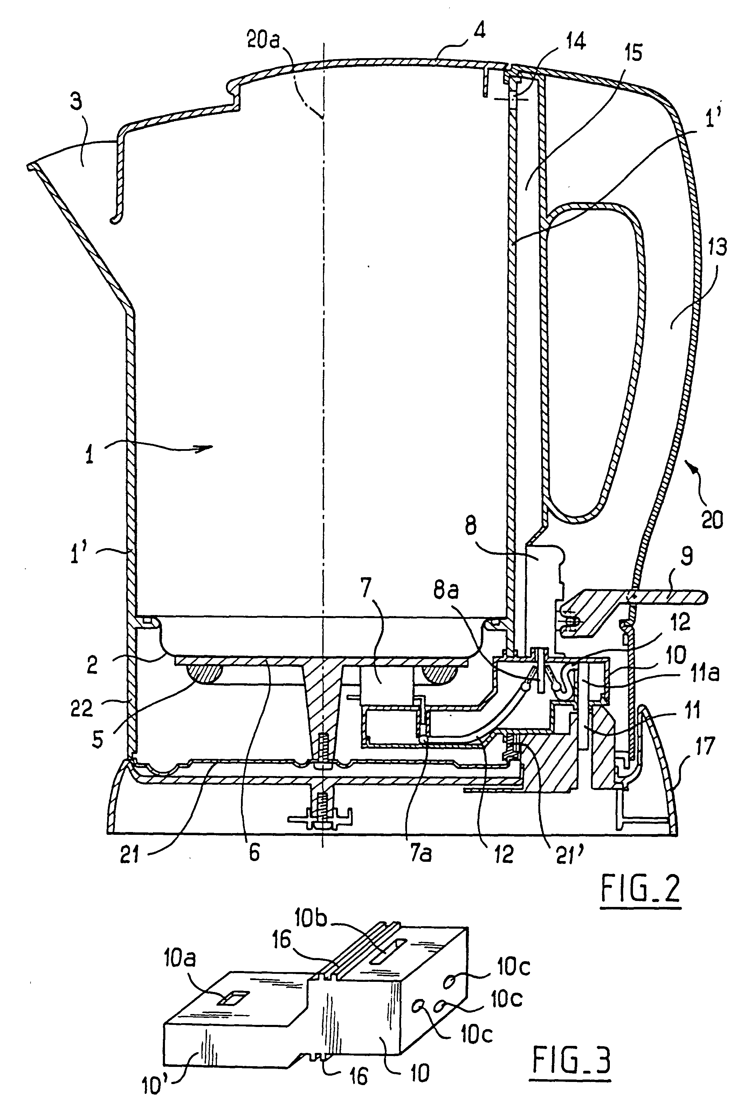

En référence tout d'abord aux figures 1 et 2, une bouilloire électrique 20 comprend un réservoir 1 de liquide à chauffer, tel que de l'eau. Un bec verseur 3 est prévu sur le bord supérieur du réservoir 1 et un couvercle 4 permet de fermer la quasi-totalité du réservoir 1.

Des moyens de chauffage 5 sont disposés sous le fond 2 du réservoir 1. Ces moyens de chauffage peuvent être constitués d'une résistance électrique tubulaire 5, une plaque de diffusion thermique étant fixée entre le fond 2 et la résistance électrique 5 afin d'améliorer le transfert de la chaleur vers le réservoir 1. Un tel agencement du fond chauffant est décrit par exemple dans le document FR-A-2 708 407.

Des moyens de commande manuelle 9 du fonctionnement des moyens de chauffage sont également prévus de manière à être apparents sur un côté 22 de la bouilloire. Ces moyens de commande manuelle peuvent être constitués d'un bouton Marche / Arrêt commandant l'alimentation électrique de la résistance 5.

Des organes de connexion 11 sont adaptés à être reliés à des moyens d'alimentation en courant électrique.

La bouilloire 20 comprend également des moyens de régulation 7, 8, susceptibles de modifier le fonctionnement de la résistance électrique 5.

Ainsi, la bouilloire 20 comporte un détecteur de vapeur 8, un orifice de passage 14 de la vapeur étant disposé à proximité du bord supérieur du réservoir et débouchant dans la poignée 13 de la bouilloire 20. Ce détecteur de vapeur 8 peut comprendre par exemple une pièce bilame qui au-delà d'une certaine température coupe l'alimentation en courant électrique de la résistance 5.

Les moyens de régulation comprennent également un limiteur thermique 7 disposé sous le fond 2 du réservoir et monté aux moyens de chauffage 5. Ce limiteur thermique 7 peut avoir à la fois un rôle de thermostat classique vis-à-vis de la résistance électrique et de fusible thermique en cas de surchauffe exceptionnelle du fond du réservoir, notamment si ce dernier est vide.

Un boîtier de connexion 10, illustré à la figure 3, est formé d'une matière électriquement isolante, en plastique résistant à la chaleur par exemple.

Le boîtier comprend des orifices 10a, 10b, 10c adaptés au passage de parties formant broches 7a, 8a, 11a du détecteur de vapeur 8, du limiteur thermique 7 et des organes de connexion 11.

Comme représenté sur les figures 1 et 2 en coupe, des fils de liaison électriques 12 s'étendent à l'intérieur du boîtier 10 entre les orifices 10a, 10b et 10c. Ces fils de liaisons 12 sont fixés dans le boîtier, de sorte que leurs extrémités viennent en contact électrique avec les parties formant broches 7a, 8a, 11a lorsque celles-ci sont mises en place dans les orifices du boîtier 10.

De préférence, le détecteur de vapeur 8 est disposé sous la poignée 13 et est fixé par une partie formant broche 8a sur le boîtier de connexion 10, à travers un orifice de passage 10b.

Le détecteur de vapeur 8 peut ainsi être embrochable de manière amovible dans le boîtier de connexion 10.

Il peut également être formé d'une seule pièce avec le boîtier de connexion 10 afin de simplifier encore le montage de la bouilloire 20.

Un conduit de vapeur 15 s'étend parallèlement à une paroi latérale 1' du réservoir 1 entre l'orifice 14 de passage de la vapeur et le détecteur de vapeur 8. Le conduit de vapeur 15 a ainsi une direction sensiblement verticale, le détecteur de vapeur 8 étant disposé sous ce conduit 15, dans son prolongement.

La vapeur vient donc en contact avec le détecteur de vapeur 8 très rapidement, ce qui permet d'obtenir une coupure de l'alimentation électrique dans un temps très court, dès l'ébullition du liquide dans la bouilloire 20.

De plus, lorsque ce détecteur de vapeur 8 a une forme allongée et est disposé verticalement sous le conduit de vapeur 15, le niveau de sécurité électrique de la bouilloire 20 est encore amélioré par le comportement favorable de ce détecteur de vapeur 8 vis-à-vis des coulées d'eau éventuelles. En effet, l'eau n'a pas tendance à stagner sur le détecteur de vapeur 8 mais au contraire coule vers la base 21 de la bouilloire 20, sur le boîtier de connexion 10 étanche.

Ce dernier comprend ainsi une partie disposée dans la corps de la bouilloire 20, sous la poignée 13, et une partie de prolongement 10' s'étendant sous le fond 2 du réservoir 1, le limiteur thermique 7 étant fixé par une partie formant broche 7a sur la partie de prolongement 10' du boîtier, à travers un orifice de passage 10a.

Comme le détecteur de vapeur 8, le limiteur thermique peut être embrochable de manière amovible ou bien être formé d'une seule pièce avec le boîtier de connexion 10. Dans ce dernier cas, un ensemble monobloc constitué du boîtier 10, du limiteur thermique 7 et du détecteur de vapeur 8 peut être construit séparément de la bouilloire 20, le montage de cette dernière étant ensuite facilité.

Les moyens de commande manuelle 9 sont de préférence directement montés sur le détecteur de vapeur 8 de sorte que la coupure de l'alimentation électrique par le détecteur de vapeur 8 a également pour conséquence de placer les moyens de commande manuelle 9 en position d'arrêt.

La totalité des moyens de commande 9 se situant hors de la zone de chauffe de la bouilloire, on peut réaliser une étanchéité statique parfaite autour du boîtier de connexion 10. Ce dernier est fixé de préférence sur la base 21 de la bouilloire 20, par exemple au moyen d'une ou plusieurs rainures 16 disposées sur les faces supérieure et inférieure du boîtier 10 et dans lesquelles viennent se loger des saillies 21' de la base 21 de la bouilloire 20 ou une extrémité inférieure d'une paroi latérale 1' du réservoir 1.

Comme représenté à la figure 1, les organes de connexion 11 sont constitués de broches 11 s'étendant parallèlement à la base 21 de la bouilloire 20 et débouchant sur une paroi latérale 22 de la bouilloire 20. On peut ainsi fixer un cordon électrique amovible sur ces broches 11 afin de relier la bouilloire à une source de courant électrique.

Dans une autre réalisation illustrée à la figure 2, les broches 11 de connexion s'étendent parallèlement à un axe vertical 20a de la bouilloire 20 et débouchent sous la bouilloire 20, au niveau de la base 21 de celle-ci. Ce type de montage est parfaitement adapté aux bouilloires à socle d'alimentation 17 sur lequel on vient poser la bouilloire 20.

Les broches de connexion 11 viennent alors de manière connue en contact électrique avec des éléments de connexion internes au socle 17.

Le boîtier de connexion 10, conforme à l'invention, permet, grâce à son positionnement à proximité de la base 21 de la bouilloire 20, de réaliser de manière très simple, une bouilloire à cordon d'alimentation amovible ou une bouilloire à socle d'alimentation électrique.

Bien entendu, de nombreuses modifications peuvent être apportées à l'exemple décrit ci-dessus sans sortir du cadre de l'invention.

## Revendications

1. Bouilloire électrique comprenant un réservoir (1) de liquide à chauffer, des moyens de chauffage électrique (5) disposés sous le fond (2) du réservoir (1), des moyens de commande manuelle (9) du fonctionnement des moyens de chauffage électrique (5), des organes de connexion (11) adaptés à être reliés à des moyens d'alimentation en courant électrique et des moyens de régulation (7,8) susceptibles de modifier le fonctionnement des moyens de chauffage électrique (5),**caractérisée en ce qu'**elle comprend un boîtier de connexion (10) en matière électriquement isolante, les moyens de régulation (7,8) et les organes de connexion (11) comportant des parties formant broches (7a, 8a, 11a) débouchant dans ledit boîtier de connexion (10), et **en ce que** des fils de liaison électrique (12) reliant les parties formant broches (7a, 8a, 11a) des moyens de régulation (7, 8) et des organes de connexion (11) sont logés dans ledit boîtier de connexion (10).

2. Bouilloire électrique conforme à la revendication 1, comprenant un détecteur de vapeur (8) et un orifice de passage (14) de la vapeur disposé à proximité du bord supérieur du réservoir (1) et débouchant dans une poignée (13) de la bouilloire (20), **caractérisée en ce que** le détecteur de vapeur (8) est disposé sous la poignée (13) et est fixé par une partie formant broche (8a) sur le boîtier de connexion (10).

3. Bouilloire électrique conforme à la revendication 2, **caractérisée en ce que** le détecteur de vapeur (8) est formé d'une seule pièce avec le boîtier de connexion (10).

4. Bouilloire électrique conforme à l'une des revendications 2 ou 3, **caractérisée en ce qu'**un conduit de vapeur (15) s'étend sensiblement parallèlement à une paroi latérale (1') du réservoir (1) entre l'orifice (14) de passage de la vapeur et le détecteur de vapeur (8).

5. Bouilloire conforme à l'une des revendications 1 à 4, les moyens de régulation comprenant un limiteur thermique (7) disposé sous le fond (2) du réservoir (1) et monté aux moyens de chauffage (5), **caractérisée en ce que** le boîtier de connexion (10) comprend une partie de prolongement (10')s'étendant sous le fond (2) du réservoir (1), le limiteur thermique (7) étant fixé par une partie formant broche (7a) sur la partie de prolongement (10').

6. Bouilloire conforme à la revendication 5, **caractérisée en ce que** le limiteur thermique (7) est formé d'une seule pièce avec le boîtier de connexion (10).

7. Bouilloire conforme à l'une des revendications 1 à 6, **caractérisée en ce que** les organes de connexion (11) sont constitués de broches (11) s'étendant parallèlement à la base (21) de la bouilloire (20) et débouchant sur une paroi latérale (22) de la bouilloire (20).

8. Bouilloire conforme à l'une des revendications 1 à 6, **caractérisée en ce que** les organes de connexion (11) sont constitués de broches (11) s'étendant parallèlement à un axe vertical (20a) de la bouilloire (20) et débouchant sous la bouilloire (20).

9. Boîtier de connexion pour une bouilloire électrique (20) conforme à l'une des revendications 1 à 8, **caractérisé en ce qu'**il comprend des orifices (10a, 10b, 10c) adaptés au passage de parties formant broches (7a, 8a, 11a) des moyens de régulation et des organes de connexion (7, 8, 11), des fils de liaison électrique (12) s'étendant à l'intérieur du boîtier (10) entre lesdits orifices (10a, 10b, 10c).

## Patentansprüche

1. Elektrisches Kochgefäß mit einem Reservoir (1) für eine zu erwärmende Flüssigkeit, einer elektrischen Heizeinrichtung (5), die unter dem Boden (2) des Reservoirs (1) angeordnet ist, einer manuellen Steuereinrichtung (9) für die Betriebsweise der elektrischen Heizeinrichtung (5), Anschlußelementen (11), die so ausgebildet sind, daß sie mit elektrischen Stromversorgungsmitteln verbunden sind und Regulierungsmitteln (7, 8), die geeignet sind, die Betriebsweise der elektrischen Heizeinrichtung (5) zu modifizieren, **dadurch gekennzeichnet, daß** dieses ein Anschlußgehäuse (10) aus einem elektrisch isolierenden Material aufweist, wobei die Regulierungsmittel (7, 8) und die Anschlußelemente (11) Stiftteile (7a, 8a, 11a) aufweisen, welche in das Anschlußgehäuse (10) münden, und dadurch, daß Drähte (12) für eine elektrische Verbindung, welche die Stiftteile (7a, 8a, 11a) der Regulierungsmittel (7, 8) verbinden, und die Anschlußelemente (11) in dem Anschlußgehäuse (10) angeordnet sind.

2. Elektrisches Kochgefäß nach Anspruch 1, mit einem Dampferfassungselement (8) und einer Durchgangsöffnung (14) des Dampfes, die in der Nähe des oberen Randes des Reservoirs (1) angeordnet ist und in einen Handgriff (13) des Kessels (20) mündet, **dadurch gekennzeichnet, daß** das Dampferfassungselement (8) unter dem Handgriff (13) angeordnet ist und durch ein Stiftteil (8a) auf dem Anschlußgehäuse (10) befestigt ist.

3. Elektrisches Kochgefäß nach Anspruch 2, **dadurch gekennzeichnet, daß** das Dampferfassungselement (8) mit dem Anschlußgehäuse (10) einstückig ausgebildet ist.

4. Elektrisches Kochgefäß nach einem der Ansprüche 2 oder 3, **dadurch gekennzeichnet, daß** sich ein Dampfkanal (15) im wesentlichen parallel zu einer Seitenwand (1') des Reservoirs (1) zwischen der Durchgangsöffnung (14) des Dampfes und dem Dampferfassungselement (8) erstreckt.

5. Kochgefäß nach einem der Ansprüche 1 bis 4, wobei die Regulierungsmittel einen Wärmebegrenzer (7) aufweisen, der unter dem Boden (2) des Reservoirs (1) angeordnet und an der Heizeinrichtung (5) angebracht ist, **dadurch gekennzeichnet, daß** das Anschlußgehäuse (10) einen Verlängerungsbereich (10') aufweist, der sich unter den Boden (2) des Reservoirs (1) erstreckt, wobei der Wärmebegrenzer (7) durch ein Stiftteil (7a) auf dem Verlängerungsbereich (10') befestigt ist.

6. Kochgefäß nach Anspruch 5, **dadurch gekennzeichnet, daß** der thermische Begrenzer (7) mit dem Anschlußgehäuse (10) einstückig ausgebildet ist.

7. Kochgefäß nach einem der Ansprüche 1 bis 6, **dadurch gekennzeichnet, daß** die Anschlußelemente (11) aus Stiften (11) gebildet sind, die sich parallel zur Basis (21) des Kessels (21) erstrecken und über einer Seitenwand (22) des Kessels (20) münden.

8. Kochgefäß nach einem der Ansprüche 1 bis 6, **dadurch gekennzeichnet, daß** die Anschlußelemente (11) aus Stiften (11) gebildet sind, die sich parallel zu einer vertikalen Achse (20a) des Kessels (20) erstrecken und unter dem Kessel (20) münden.

9. Anschlußgehäuse für einen elektrischen Kochkessel (20) nach einem der Ansprüche 1 bis 8, **dadurch gekennzeichnet, daß** dieses Öffnungen (10a, 10b, 10c), die für den Durchgang von Stiftteilen (7a, 8a, 11a) der Regulierungsmittel ausgebildet sind und Anschlußelemente (7, 8, 11) umfaßt, wobei sich elektrische Verbindungsdrähte (12) im Inneren des Gehäuses (10) zwischen den Öffnungen (10a, 10b, 10c) erstrecken.

## Claims

1. Electric kettle comprising a reservoir (1) of liquid to be heated, electric heating means (5) located underneath the soleplate (2) of the reservoir (1), manual control means (9) for operating the electric heating means (5), connection members (11) designed to be connected to electric power supply means, and regulating means (7, 8) for modifying the operation of the electric heating means (5), the kettle being **characterized in that** it comprises a connection housing (10) made of electrically insulating material, the regulating means (7, 8) and the connection members (11) having parts that form pins (7a, 8a, 11a) leading into the said connection housing (10), and **in that** electric connecting wires (12) connecting the pin parts (7a, 8a, 11a) of the regulating means (7, 8) and connection members (11) are housed in the connection housing (10).

2. Electric kettle in accordance with Claim 1, comprising a steam sensor (8) and a steam orifice (14) situated in the vicinity of the upper edge of the reservoir (1) and leading into a handle (13) of the kettle (20), **characterized in that** the steam sensor (8) is situated underneath the handle (13) and is mounted by a pin part (8a) on the connection housing (10).

3. Electric kettle in accordance with Claim 2, **characterized in that** the steam sensor (8) is formed in one piece with the connection housing (10).

4. Electric kettle in accordance with either of Claims 2 and 3, **characterized in that** a steam channel (15) runs generally parallel to a side wall (1') of the reservoir (1) between the steam orifice (14) and the steam sensor (8).

5. Kettle in accordance with one of Claims 1 to 4, the regulating means comprising a thermal limiter (7) situated underneath the soleplate (2) of the reservoir (1) and mounted on the heating means (5), the kettle being **characterized in that** the connection housing (10) comprises a continuation part (10') extending underneath the soleplate (2) of the reservoir (1), the thermal limiter (7) being attached by a pin part (7a) to the continuation part (10').

6. Kettle in accordance with Claim 5, **characterized in that** the thermal limiter (7) is formed in one piece with the connection housing (10).

7. Kettle in accordance with one of Claims 1 to 6, **characterized in that** the connection members (11) are pins (11) extending parallel to the base (21) of the kettle (20) and reaching as far as a side wall (22) of the kettle (20).

8. Kettle in accordance with one of Claims 1 to 6, **characterized in that** the connection members (11) are pins (11) extending parallel to a vertical axis (20a) of the kettle (20) and emerging on the underside of the kettle (20).

9. Connection housing for an electric kettle (20) in accordance with one of Claims 1 to 8, **characterized in that** it comprises orifices (10a, 10b, 10c) for insertion of pin parts (7a, 8a, 11a) of the regulating means and of the connection members (7, 8, 11), electric connecting wires (12) extending through the housing (10) between the said orifices (10a, 10b, 10c).
